# EUROPEAN PATENT APPLICATION

(11) **EP 2 256 528 A1**
(43) Date of publication of application: **01.12.2010**
(21) Application number: 10163598.5
(22) Date of filing: 21.05.2010
(51) Int. Cl.: G02B 6/35, G01S 7/495

(54) **Optical fiber switch**

(30) Priority: 28.05.2009 US 181685 P; 14.05.2010 US 780575
(71) Applicant: Daylight Solutions, Inc., Poway, CA 92064 (US)
(72) Inventor: Pushkarsky, Michael, San Diego, CA 92130 (US); Berg, Thomas Edward, Fort Collins, CO 80526 (US)
(74) Representative: Viering, Jentschura & Partner

(57) **Abstract**

An optical fiber switch (16) for alternatively directing an input beam (14) to a plurality of different locations (18A) (18B) (18C) (18D) includes an input fiber (30), a redirector (32), a redirector mover (382), a first output fiber (34), and a second output fiber (36). The input fiber (30) launches the input beam (14) along an input axis (30A). The redirector (32) is positioned in the path of the input beam (14). The redirector (32) redirects the input beam (14) so that a redirected beam (42) launches from the redirector (32) along a first redirected axis (360) that is spaced apart from the input axis (30A) when the redirector (32) is positioned at a first position (346), and launches from the redirector (32) along a second redirected axis (362) that is spaced apart from the input axis (30A) when the redirector (32) is positioned at a second position (348) that is different from the first position (346). The redirector mover (382) moves the redirector (32) about a movement axis (386) between the first position (346) and the second position (348). The first output fiber (34) has a first fiber inlet (34B) that is positioned along the first redirected axis (360). The second output fiber (36) has a second fiber inlet (36B) that is positioned along the second redirected axis (362).

## Description

### RELATED INVENTIONS

This application claims priority on U.S. Provisional Application Serial No. 61/181,685, filed May 28, 2009 and entitled "HIGH RELIABILITY OPTICAL FIBER SWITCH" and on U.S. Patent Application No. 12/780,575, filed on May 14, 2010 and entitled "OPTICAL FIBER SWITCH". As far as is permitted, the contents of U.S. Provisional Application Serial No. 61/181,685 and of U.S. Patent Application No. 12/780,575 are incorporated herein by reference.

### BACKGROUND

Laser sources that generate laser beams are commonly used in many applications, such as testing, measuring, diagnostics, pollution monitoring, leak detection, security, jamming infrared seeking missile guidance systems, analytical instruments, homeland security and industrial process control.

Often, many systems require multiple laser beams to perform their required functions. Thus, these systems typically require a separate laser source for each of the required laser beams. Unfortunately, providing a separate laser source for each required laser beam can be expensive to manufacture, and require a significant amount of space.

### SUMMARY

The present invention is directed to an optical fiber switch for alternatively directing an input beam to a plurality of alternative locations. In one embodiment, the optical switch includes an input beam, a redirector, a redirector mover, output fiber. The input beam is launched along an input axis. The redirector is positioned in the path of the input beam. The redirector redirects the input beam so that a redirected beam (i) launches from the redirector along a first redirected axis that is spaced apart from the input axis when the redirector is positioned at a first position, and (ii) launches from the redirector along a second redirected axis that is spaced apart from the input axis when the redirector is positioned at a second position that is different from the first position. The redirector mover moves the redirector about a movement axis between the first position and the second position. The first output fiber has a first fiber coupling lens that is positioned along the first redirected axis. The second output fiber has a second coupling lens that is positioned along the second redirected axis.

As provided herein, the optical fiber switch is uniquely designed to accurately, selectively, and individually couple the input beam to the various output fibers. As a result thereof, a single light source can be used to alternatively provide the input beam to multiple different output fibers that can direct the input beam to many different locations.

In one embodiment, the movement axis is substantially coaxial with the input beam axis, the first redirected axis is substantially parallel to the input axis, and the second redirected axis is substantially parallel to the input axis.

In certain embodiments, the redirector includes an input reflective surface that is positioned in the path of the input beam and an output reflective surface that is substantially parallel to and spaced apart from the input reflective surface along a redirector longitudinal axis. For example, the input reflective surface can redirect the input beam approximately ninety degrees, and the second reflective surface can redirect the input beam approximately ninety degrees. Moreover, the input reflective surface can be fixedly coupled to the second reflective surface so that they are move concurrently.

Additionally, the redirector can redirect the input beam so that resulting redirected beam launches from the redirector along a third redirected axis that is spaced apart from the input axis when the redirector is positioned at a third position that is different from the first position and the second position. In this embodiment, the redirector mover moves the redirector between the first position, the second position, and the third position.

Further, the optical fiber switch can include (i) a first coupling lens that is positioned on the first redirected axis between the redirector and the first fiber inlet when the redirector is in the first position, the first coupling lens focusing the redirected beam at the first fiber inlet when the redirector is in the first position; and (ii) a second coupling lens that is positioned on the second redirected axis between the redirector and the second fiber inlet when the redirector is in the second position, the second coupling lens focusing the redirected beam at the second fiber inlet when the redirector is in the second position.

In another embodiment, the present invention is directed to a light source assembly that includes a light source generating an input beam, and the optical fiber switch described herein that alternatively directs the input beam to the first output fiber or the second output fiber. In yet another embodiment, the present invention is directed to a missile jamming system for jamming an infrared seeking sensor of an incoming missile.

In still another embodiment, the present invention is directed to a method for directing an input beam that includes (i) launching the input beam along an input axis; (ii) positioning a redirector in the path of the input beam, the redirector redirecting the input beam so that a redirected beam launches from the redirector along a first redirected axis that is spaced apart from the input axis when the redirector is positioned at a first position, and launches from the redirector along a second redirected axis that is spaced apart from the input axis when the redirector is positioned at a second position that is different from the first position; (iii) moving the redirector about a movement axis between the first position and the second position with a redirector mover; (iv) positioning a first output fiber having a first fiber inlet along the first redirected axis; and (v) positioning a second output fiber having a second fiber inlet along the second redirected axis.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1 is simplified perspective illustration of a light source assembly including an optical fiber switch having features of the present invention;
Figure 2 is a simplified illustration of an aircraft including the light source assembly of Figure 1;
Figure 3A is a simplified side illustration of a portion of the optical fiber switch of Figure 1 with a redirector of the optical fiber switch positioned in a first position;
Figure 3B is a simplified side illustration of the portion of the optical fiber switch with the redirector positioned in a second position;
Figure 3C is a simplified side illustration of the portion of the optical fiber switch with the redirector positioned in a third position;
Figure 4 is a perspective view of a redirector having features of the present invention;
Figures 5A-5C are alternative illustrations of redirected beams, a coupling lens, and an output fiber;
Figure 6A is a rear perspective view of another embodiment of an optical fiber switch having features of the present invention;
Figure 6B is a rear perspective view and Figure 6C is a front perspective view of a portion of the optical fiber switch of Figure 6A; and
Figure 6D is a cut-away view of the portion of the optical fiber switch illustrated in Figures 6B and 6C.

### DESCRIPTION

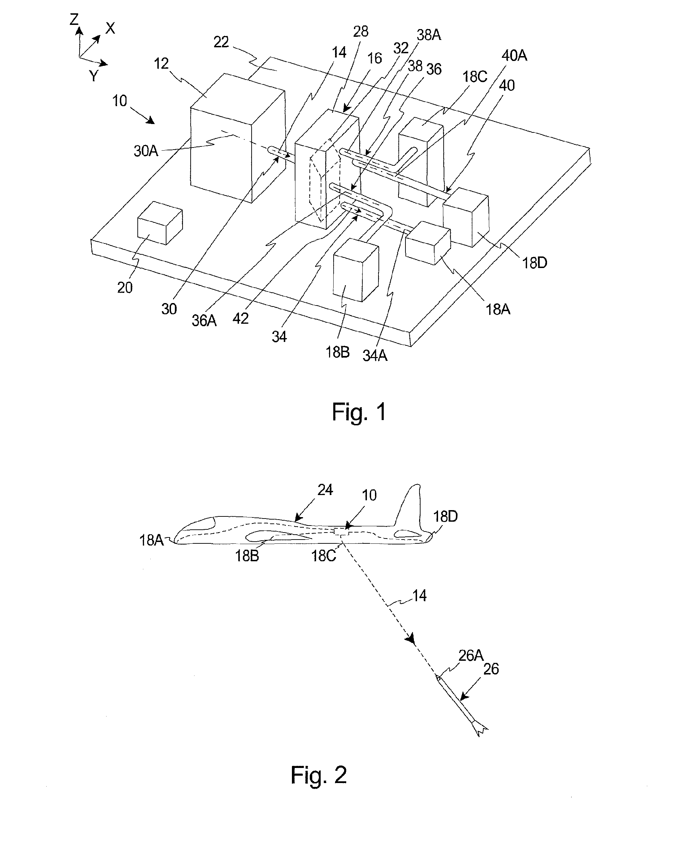

Figure 1 is simplified side illustration of a light source assembly 10 that can be used for many things, including but not limited to testing, measuring, diagnostics, pollution monitoring, leak detection, security, jamming a guidance system, analytical instruments, homeland security and industrial process control. The design of the light source assembly 10 can be varied to achieve the design requirements for the assembly 10. In Figure 1, the light source assembly 10 includes a light source 12 that generates an input beam 14 (illustrated as a dashed arrow); an optical fiber switch 16 that selectively and alternatively directs the input beam 14 to a plurality of different locations 18A, 18B, 18C, 18D (illustrated as boxes); a control system 20 that controls the operation of the light source 12 and the optical fiber switch 16; and a mounting base 22 that retains one or more of these components.

Alternatively, the laser source assembly 10 can be designed with more or fewer components than are illustrated in Figure 1 and/or the arrangement of these components can be different than that illustrated in Figure 1. Further, the size and shape of these components can be different than that illustrated in Figure 1.

A number of Figures include an orientation system that illustrates an X axis, a Y axis that is orthogonal to the X axis and a Z axis that is orthogonal to the X and Y axes. It should be noted that these axes can also be referred to as the first, second and third axes.

As an overview, the optical fiber switch 16 is uniquely designed to accurately, selectively, and individually direct the input beam 14 to the various locations 18A, 18B, 18C, 18D. As a result thereof, a single light source 12 can be used to alternatively provide the input beam 14 to multiple different devices or components. Moreover, with the unique optical fiber switch 16 provided herein, the beam 14 generated by the light source 12 can be selectively directed to the appropriate location 18A, 18B, 18C, 18D with minimal power loss.

There are a number of possible usages for the laser source assembly 10 disclosed herein. For example, Figure 2 illustrates one non-exclusive embodiment of how the laser source assembly 10 (illustrated in phantom) can be utilized. In this embodiment, the laser source assembly 10 is used on an aircraft 24 (e.g. a plane or helicopter) to protect that aircraft 24 from a heat seeking missile 26. In this embodiment, the missile 26 is locked onto the heat emitting from the aircraft 24, and the laser source assembly 10 emits the beam 14 that protects the aircraft 24 from the missile 26. For example, the beam 14 can be directed at the missile 26 to jam the guidance system 26A (illustrated as a box in phantom) of the missile 26. In this embodiment, the laser source assembly 10 functions as a jammer of an anti-aircraft missile. The exact wavelength of the beam 14 that effectively jams the guidance system 26A is not currently known by the inventors. However, with the present invention, the light source 12 (illustrated in Figure 1) can be accurately tuned to the appropriate wavelength for jamming the guidance system 26A.

With the present invention, the optical fiber switch 16 (illustrated in Figure 1) can be used to direct the beam 14 to the appropriate location 18A, 18B, 18C, 18B to launch the beam 14 from the desired area of the aircraft 24. With this design, the optical fiber switch 16 can be used to control the location 18A, 18B, 18C, 18D of the aircraft 24 from which the beam 14 is launched depending upon the approach direction of the missile 26 so that the beam 14 can effectively jam the missile 26.

It should be noted that the laser source assembly 10 can be powered by a generator, e.g. the generator for the aircraft 24, a battery, or another power source.

Referring back to Figure 1, as provided above, the light source 12 generates the input beam 14. The design of the light source 12 can be varied to achieve the desired wavelength and output power for the input beam 14. For example, the light source 12 can be designed to generate an input beam 14 that is primarily a single wavelength beam or is primarily a multiple wavelength (incoherent) beam. Thus, the characteristics of the input beam 12 can be adjusted to suit the application for the light source 12.

In one embodiment, the laser source 12 can include one or more lasers (not shown) that each generate a beam. In the embodiment with multiple lasers, the individual beams are combined to create the input beam 14. Further, in the design with multiple lasers, each laser can be individually tuned so that a specific wavelength of each beam is the same or different. With this design, the number and design of the lasers can be varied to achieve the desired characteristics of the input beam 14 to suit the application for the laser source assembly 10. Thus, the light source 12 can be used to generate a narrow linewidth, accurately settable input beam 14.

In one non-exclusive embodiment, the laser source 12 includes one or more Mid infrared ("MIR") lasers (not shown) that each generates a beam having a center wavelength in the MIR range, and one or more non-MIR lasers (not shown) that each generates a beam having a center wavelength that is outside the MIR range, e.g. greater than or less than the MIR range. One example of a suitable MIR laser is a Quantum Cascade laser, and one example of a suitable non-MIR laser source 354 is a diode-pumped Thulium-doped fiber laser.

The optical fiber switch 16 selectively and alternatively directs the input beam 14 to each of the locations 18A, 18B, 18C, 18D. In one embodiment, the optical fiber switch 16 includes a switch housing 28, an input fiber 30, a redirector 32 (illustrated as a box in phantom), and a plurality of output fibers 34, 36, 38, 40.

The switch housing 28 retains the components of the optical fiber switch 16, including a portion of the input fiber 30, the redirector 32, and a portion of the output fibers 34, 36, 38, 40. The design of the switch housing 28 can be varied to achieve the design requirements of the optical fiber switch 16.

The input fiber 30 is an optical fiber that transfers and directs the input beam 14 from the laser source 12 to the redirector 32. In one embodiment, the input fiber 30 launches the input beam 14 at the redirection 32 along an input axis 30A that is substantially parallel to the Y axis in this example.

The redirector 32 is positioned in the path of the input beam 14 and can be used to alternatively and selectively direct and steer a redirected beam 42 (illustrated with a dashed arrow in the first output fiber 34) to each of the output fibers 34, 34, 38, 40. The redirector 32 will be described in more detail below.

The output fibers 34, 34, 38, 40 each alternatively receive the redirected beam 42 and can be used to direct the redirected beam 42 from the optical fiber switch 16 to the respective locations 18A, 18B, 18C, 18D. The number and design of the output fibers 34, 36, 38, 40 can be varied to achieve the design requirements of the light source assembly 10. In the embodiment illustrated in Figure 1, the optical fiber switch 16 includes four, spaced apart output fibers 34, 36, 38, 40 and each of the output fibers 34, 36, 38, 40 is an optical fiber. In this embodiment, the output fibers 34, 36, 38, 40 can be labeled as a first output fiber 34, a second output fiber 36, a third output fiber 38, and a fourth output fiber 40. Further, each of the output fibers 34, 36, 38, 40 includes a fiber input (not shown in Figure 1) positioned near the redirector 32. Moreover, in Figure 1, the output fibers 34, 36, 38, 40 are arranged about a circle that is coaxial with the input axis 30A, and the fiber inputs for the output fibers 34, 36, 38, 40 are equally spaced apart (e.g. ninety degrees apart).

Additionally, in the embodiment of Figure 1, (i) the fiber input for the first output fiber 34 is positioned and aligned along a first output axis 34A; (ii) the fiber input for the second output fiber 36 is positioned and aligned along a second output axis 36A that is spaced apart from and substantially parallel to the first output axis 34A; (iii) the fiber input for the third output fiber 38 is positioned and aligned along a third output axis 38A that is spaced apart from and substantially parallel to the first output axis 34A and the second output axis 36A; and (iv) the fiber input for the fourth output fiber 40 is positioned and aligned along a fourth output axis 40A that is spaced apart from and substantially parallel to the first output axis 34A, the second output axis 36A, and the third output axis 38A. Moreover, in Figure 1, the output axes 34A, 36A, 38A, 40A are parallel to the input axis 30A, and are offset an equal distance away from the input axis 30A.

Alternatively, the optical fiber switch 16 can be designed to have more than four or fewer than four output fibers 34, 36, 38, 40.

The control system 20 controls the operation of the other components of the light source assembly 10. For example, the control system 20 can include one or more processors and circuits. In certain embodiments, the control system 20 can control the electron injection current to the laser source 12 and the control system 20 can control the optical fiber switch 16 to control the position of the redirector 32 to control which output fiber 34, 36, 38, 40 is receiving the redirected beam 42.

The mounting base 22 provides a rigid platform that supports one or more of the components of the light source assembly 10 and maintains the relative position of the components of the laser source assembly 10. In one non-exclusive embodiment, the mounting base 22 includes a plurality of embedded base passageways (not shown) that allow for the circulation of the hot and/or cold circulation fluid through the mounting base 22 to maintain the temperature of the mounting base 22 and the components mounted thereon.

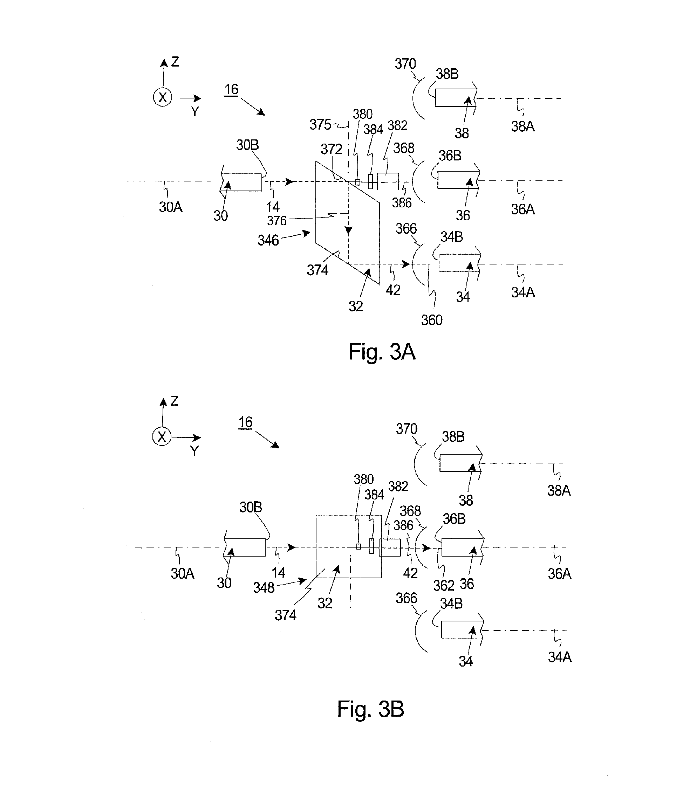

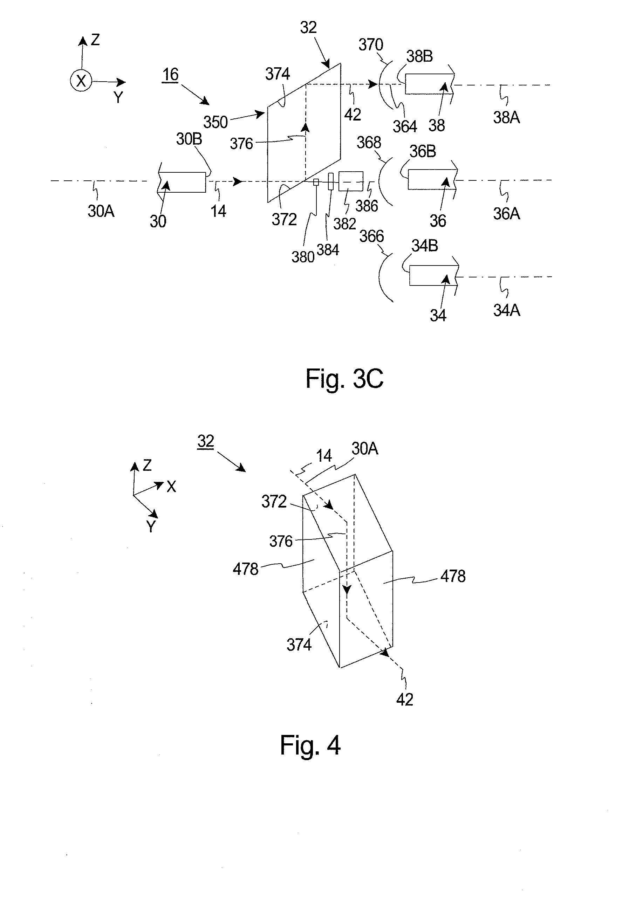

Figure 3A is a simplified side illustration of the optical fiber switch 16 with the redirector 32 positioned in a first position 346; Figure 3B is a simplified side illustration of the optical fiber switch 16 with the redirector 32 positioned in a second position 348 that is different from the first position 346; and Figure 3C is a simplified side illustration of the optical fiber switch 16 with the redirector 32 positioned in a third position 350 that is different from the first position 346 and the second position 348. It should be noted that the switch housing 28 (illustrated in Figure 1) is not shown in Figures 3A - 3C so that the other components of the optical fiber switch 16 are visible. In this embodiment, the optical fiber switch 16 again selectively directs the input beam 14 to each of the output fibers 34, 36, 38. It should be noted that in these side illustrations that the fourth output fiber 40 is not visible.

Figures 3A-3C illustrate that the input fiber 30 includes an outlet end 30B that is positioned near the redirector 32 and that launches the input beam 14 along the input axis 30A at the redirector 32.

Moreover, Figures 3A-3C illustrate that the redirector 32 is positioned in the path of the input beam 14. In this embodiment, the redirector 32 redirects the input beam 14 so that the redirected beam 42 (i) launches from the redirector 32 along a first redirected axis 360 that is spaced apart from the input axis 30A when the redirector 32 is positioned at the first position 246 as illustrated in Figure 3A; (ii) launches from the redirector 32 along a second redirected axis 362 that is spaced apart from the input axis 30A when the redirector 32 is positioned at the second position 348 as illustrated in Figure 3B; (iii) launches from the redirector 32 along a third redirected axis 364 that is spaced apart from the input axis 30A when the redirector 32 is positioned at the third position 350 as illustrated in Figure 3C; and (iv) launches from the redirector 32 along a fourth redirected axis (not shown) that is spaced apart from the input axis 30A when the redirector 32 is positioned at a fourth position (not shown).

In this embodiment, the optical fiber switch 16 is designed so that the redirected axes 360, 362, 364 are equally spaced apart (e.g. ninety degrees apart). Moreover, in this embodiment, the redirected axes 360, 362, 364 are parallel to the input axis 30A, and are each offset an equal distance away from the input axis 30A. In Figures 3A-3C, the first redirected axis 360 is offset from the input axis 30A downward along the Z axis; the second redirected axis 362 is offset from the input axis 30A (out of the page) along the X axis; the third redirected axis 364 is offset from the input axis 30A upward along the Z axis; and the fourth redirected axis is offset from the input axis 30A (into the page) along the X axis.

In Figures 3A-3C, (i) a first fiber inlet 34B of the first output fiber 34 is positioned along the first output axis 34A; (ii) a second fiber inlet 36B of the second output fiber 36 is positioned along the second output axis 36A; (iii) a third fiber inlet 38B of the third output fiber 38 is positioned along the third output axis 38A; and (iv) a fourth fiber inlet (not shown) of the fourth output fiber 40 (illustrated in Figure 1) is positioned along the fourth output axis 40A (illustrated in Figure 1).

Moreover, (i) the first output axis 34A is coaxial with the first redirected axis 360 so that when the redirected beam 42 is directed by the redirector 32 along the first redirected axis 360 as shown in Figure 3A, the beam 42 is directed at the first fiber inlet 34B; (ii) the second output axis 36A is coaxial with the second redirected axis 362 so that when the redirected beam 42 is directed by the redirector 32 along the second redirected axis 362 as shown in Figure 3B, the beam 42 is directed at the second fiber inlet 36B; (iii) the third output axis 38A is coaxial with the third redirected axis 364 so that when the redirected beam 42 is directed by the redirector 32 along the third redirected axis 364 as shown in Figure 3C, the beam 42 is directed at the third fiber inlet 38B; and (iv) the fourth output axis 40A is coaxial with the fourth redirected axis so that when the redirected beam 42 is directed by the redirector 32 along the fourth redirected axis, the beam 42 is directed at the fourth fiber inlet.

Additionally, the optical fiber switch 16 can include (i) a first coupling lens 366 that is positioned on the first redirected axis 360 between the redirector 32 and the first fiber inlet 34B when the redirector 32 is in the first position 346, the first coupling lens 366 focusing the redirected beam 42 at the first fiber inlet 34B when the redirector 32 is in the first position 346; (ii) a second coupling lens 368 that is positioned on the second redirected axis 362 between the redirector 32 and the second fiber inlet 36B when the redirector 32 is in the second position 248, the second coupling lens 368 focusing the redirected beam 42 at the second fiber inlet 36B when the redirector 32 is in the second position 348; (iii) a third coupling lens 370 that is positioned on the third redirected axis 364 between the redirector 32 and the third fiber inlet 38B when the redirector 32 is in the third position 350, the third coupling lens 370 focusing the redirected beam 42 at the third fiber inlet 38B when the redirector 32 is in the third position 350; and (ii) a fourth coupling lens (not shown) that is positioned on the fourth redirected axis between the redirector 32 and the fourth fiber inlet when the redirector 32 is in the fourth position, the fourth coupling lens focusing the redirected beam 42 at the fourth fiber inlet when the redirector 32 is in the fourth position.

In one embodiment, each coupling lens 366, 368, 370 is a lens (either spherical or aspherical) having an optical axis that is aligned with the respective redirected axis 360, 362, 364. In one embodiment, to achieve the desired small size and portability, each coupling lens 366, 368, 370 has a relatively small diameter. In alternative, non-exclusive embodiments, each coupling lens 366, 368, 370 has a diameter of less than approximately 10 or 15 millimeters, and a focal length of approximately 1, 2, 3, 4, 5, 6, 7, 8, 9, 10, 11, 12, 13, 14, 15, 16, 17, 18, 19, 20, 21, 22, 23, 24 or 25 mm and any fractional values thereof. The materials used for the coupling lens 366, 368, 370 are selected to be effective for the wavelength(s) of the redirected beam 42. The coupling lens 366, 368, 370 can be designed to have numerical aperture (NA) which matches that of the respective output fiber 34, 36, 38, 40. In one embodiment, each coupling lens 366, 368, 370 is secured to the switch housing 28.

In certain embodiments, each fiber inlet 34B, 36B, 38B includes a facet that is coated with an AR (anti-reflection). The AR coating allows the redirected beam 42 to easily enter the respective facet and facilitates the entry of the redirected beam 42 into the respective output fiber 34, 36, 38, 30. This improves the efficiency of the coupling between the respective coupling lens 366, 368, 370 and its corresponding output fiber 34, 36, 38, and 40, and reduces the amount of heat that is generated at the respective fiber facet. Further, the AR coating ensures that the majority of the power generated by the light source 12 is transferred to the respective output fiber 34, 36, 38, 40. This improves the efficiency of the optical fiber switch 16.

In one embodiment, the AR coating has a relatively low reflectivity at the wavelength(s) of the redirected beam 42. In alternative, non-exclusive embodiments, the AR coating can have a reflectivity of less than approximately 1, 2, 3, 4, or 5 percent for the wavelength(s) of the redirected beam 42.

The materials utilized and the recipe for each of the coatings can be varied according to the wavelengths of the redirected beam 42. Suitable materials for the coatings include silicone, germanium, metal-oxides, and/or metal flourides. Further, the recipe for each of the coatings can be developed using the commercially available coating design program sold under the name "The Essential Macleod", by Thin Film Center Inc., located in Tucson, Arizona.

The design of the redirector 32 can be varied pursuant to the teachings provided herein. In one embodiment, the redirector 32 includes an input reflective surface 372 that is positioned in the path of the input beam 14, and an output reflective surface 374 that is substantially parallel to (in parallel planes) and spaced apart from the input reflective surface 372 along a redirector longitudinal axis 375 (illustrated in Figure 3A) that is perpendicular to the input axis 30A. In this embodiment, each reflective surface 372, 374 is adapted to reflect the beam 14. For example, the input reflective surface 372 can redirect the input beam 14 approximately ninety degrees, and the output reflective surface 374 can redirect an intermediate beam 376 reflected off of the input reflective surface 372 approximately ninety degrees. In this embodiment, the input reflective surface 372 is at an angle of approximately forty-five degrees relative to the input beam 14, and the output reflective surface 374 is at an angle of approximately forty-five degrees relative to both the intermediate beam 376 and the redirected beam 42. With this design, in this embodiment, the redirected beam 42 is parallel and spaced apart from the input beam 14. Moreover, the input reflective surface 372 can be fixedly coupled to the second reflective surface 374 so that they are move concurrently during movement of the redirector 32.

Figure 4 is a perspective view of one non-exclusive embodiment of the redirector 32. In this embodiment, the redirector 32 is a monolithic, rectangular shaped prism and the parallel reflective surfaces 372, 374 (e.g. mirrors) define the opposed ends of the prism. Further, in this embodiment, in addition to the opposed ends 372, 374, the prism includes four sides 478.

In this embodiment, the redirector 32 can be made of germanium, zinc selenide, silicone, calcium fluoride, barium fluoride or chalcogenide glass. The working surfaces can be coated or uncoated (relying on internal total reflection).

Alternatively, for example, the redirector 32 can be made from two parallel, spaced apart reflective surfaces 372, 374 that are fixedly secured together.

The input beam 14, the intermediate beam 376, and the redirected beam 42 are also illustrated in Figure 4. In this embodiment, the input beam 14 impinges on the input reflective surface 372 at an angle of approximately forty-five degrees, and the redirected beam exits from the output reflective surface 374 at an angle of approximately forty-five degrees.

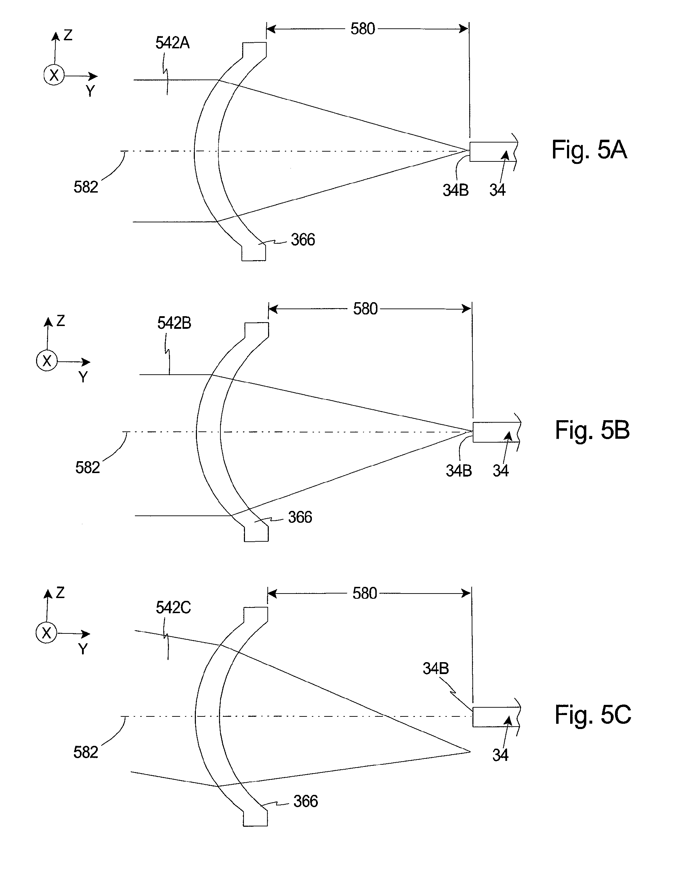

As provided below, in certain embodiments, the redirector 32 is rotated about the input axis 30A (where the input beam 14 impinges the input reflective surface 372) during movement of the redirector 32 between the positions 346, 348, 350 (illustrated in Figure 3A-3C). With this design, the input beam 14 impinges at the same location on the input reflective surface 372 irrespective of the position 346, 348, 350 of the redirector 32. In Figure 4, the input axis 30A is parallel to the Y axis. It should be noted that with this design of the redirector 32, that any minor spatial/angular displacement of the redirector 32 (e.g. about the Z axis or about the X axis shifts the beam 14 in space while preserving the propagation direction. As described in reference to Figures 5A-5C below, small shifts in space while preserving the propagation direction are allowable without losses of power. This allows for looser tolerances in the manufacture of the optical fiber switch 16 and a less expensive to make optical fiber switch 16.

Referring back to Figures 3A-3C, additionally, the optical fiber switch 16 can include a redirector guide 380, a redirector mover 382, and a measurement system 384 that are each illustrated as a box.

The redirector guide 380 guides the movement of the redirector 32 relative to the input beam 14 and the output fibers 34, 36, 38, 40. As one non-exclusive embodiment, the redirector guide 380 includes one or more bearings that allow the redirector 32 to be rotated about a single movement axis 386, while inhibiting all other movement of the redirector 32. In Figures 3A-3C, the rotation axis 386 is coaxial with the input axis 30A. As a result thereof, in this embodiment, the redirector 32 rotates about the input axis 30A between the positions 346, 348, 350.

The redirector mover 382 precisely moves the redirector 32 about the movement axis 386 between the first position 346, the second position 348, the third position 350, and the fourth position. In one, non-exclusive embodiment, the redirector mover 382 is a stepper motor that can precisely move the redirector 32 between the positions 346, 348, 350.

The measurement system 384 monitors the rotational position of the redirector 32 and provides feedback to redirector mover 382 so that the redirector mover 382 can accurately position the redirector 32. In one, non-exclusive embodiment, the measurement system 384 is a rotary encoder.

Figures 5A is a simplified illustration of a first redirected beam 542A, the first coupling lens 366, and the first fiber inlet 34B of the first output fiber 34. The first coupling lens 366 has a focal length 580 and an optical axis 582. The first fiber inlet 34B is spaced apart the focal length 580 from the first coupling lens 366, and the first fiber inlet 34B is aligned with the optical axis 582. In this embodiment, the redirector 32 (illustrated in Figures 3A-3C) was properly positioned. As a result thereof, the redirector 32 directed the first redirected beam 542A coaxial to and aligned with the optical axis 582, and the first redirected beam 542A is imaged on the first fiber inlet 34B.

Figures 5B is a simplified illustration of a second redirected beam 542B, the first coupling lens 366, and the first fiber inlet 34B of the first output fiber 34. The first fiber inlet 34B is spaced apart the focal length 580 from the first coupling lens 366, and the first fiber inlet 34B is aligned with the optical axis 582. In this embodiment, the redirector 32 (illustrated in Figures 3A-3C) was not properly positioned. For example, the redirector 32 can be out of position about the Z axis or about the X axis. As a result thereof, the second redirected beam 542B is spaced shifted along the Z axis, but is still parallel to the optical axis 582. With the present invention, even though the second redirected beam 542B is spaced shifted along the Z axis, it is imaged on the first fiber inlet 34B.

One advantage of the redirector described in present invention is more clearly understood with reference to Figures 5C. In Figure 5C, a third redirected beam 542C is misaligned. This type of beam 542C misalignment is not possible with the redirector 32 (illustrated in Figures 3A-3C) of the present invention. Instead, the misalignment of the beam 542C illustrated in Figure 5C is a possible result of using multiple individually controlled mirrors (not shown) to redirect the beam 542C. Figure 5C illustrates the third redirected beam 542C, the first coupling lens 366, and the first fiber inlet 34B of the first output fiber 34. Moreover, the first fiber inlet 34B is spaced apart the focal length 580 from the first coupling lens 366, and the first fiber inlet 34B is aligned with the optical axis 582. In this embodiment, instead of using the redirector 32 (illustrated in Figures 3A-3C) to direct the beam, an arrangement of independently movable mirrors with substantially inaccurately set angles were used. Because the mirrors move independently, their individual moving errors are not compensated. As a result thereof, the third redirected beam 542C is angular-steered, e.g. is angled relative to the optical axis 582. When the third redirected beam 542C is angled, the third redirected beam 542C is not imaged on the first fiber inlet 34B.

With the present invention, the optical fiber switch 16 is designed so that the motion of the redirector 32 is chosen so that any inevitable errors in the positioning of the redirector 32 will still result in the redirected beam 542A, 542B (as shown in Figures 5A, 5B) being directed on the fiber inlet 34B. With the present invention, inevitable errors in the positioning of the redirector 32 will not result in the angled third redirected beam 542C of Figure 5C.

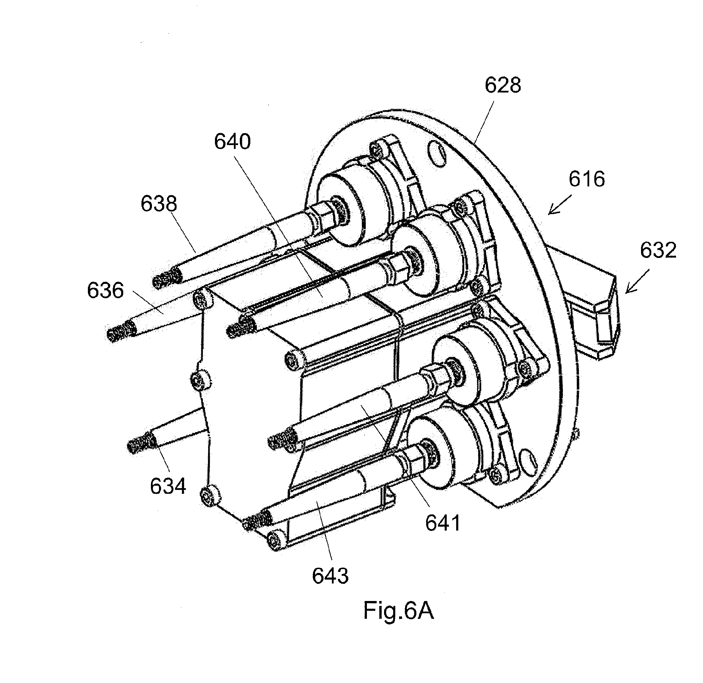

Figure 6A is a rear perspective view of another embodiment of an optical fiber switch 616 including the switch housing 628, the redirector 632, and six separate output fibers 634, 636, 638, 640, 641, 643. In this embodiment, the optical fiber switch 616 selectively, individually, and alternatively directs the input beam (not shown in Figure 6A) to the plurality of different output fibers 634, 636, 638, 640, 641, 643.

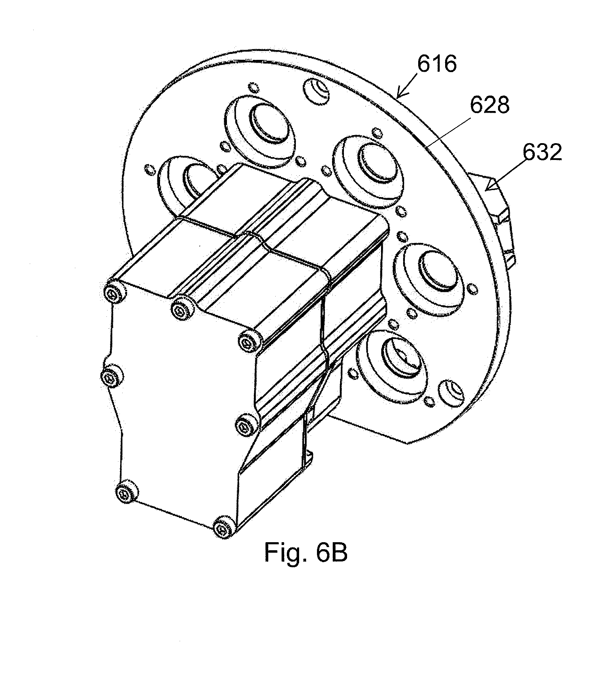

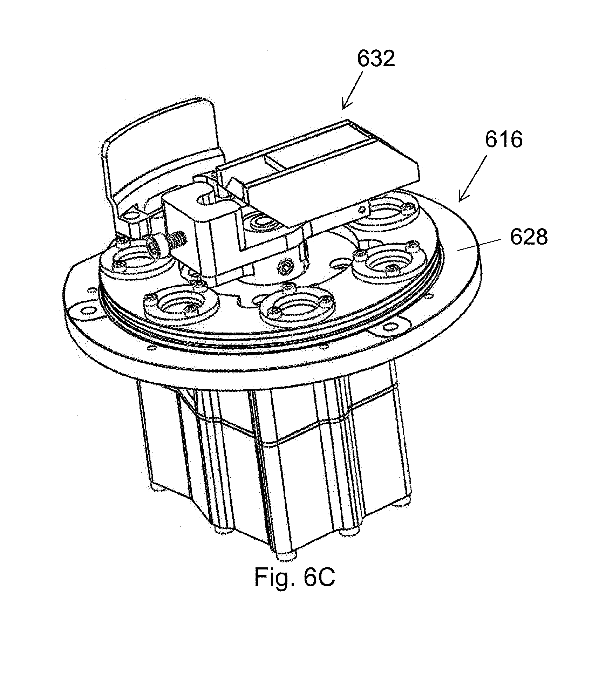

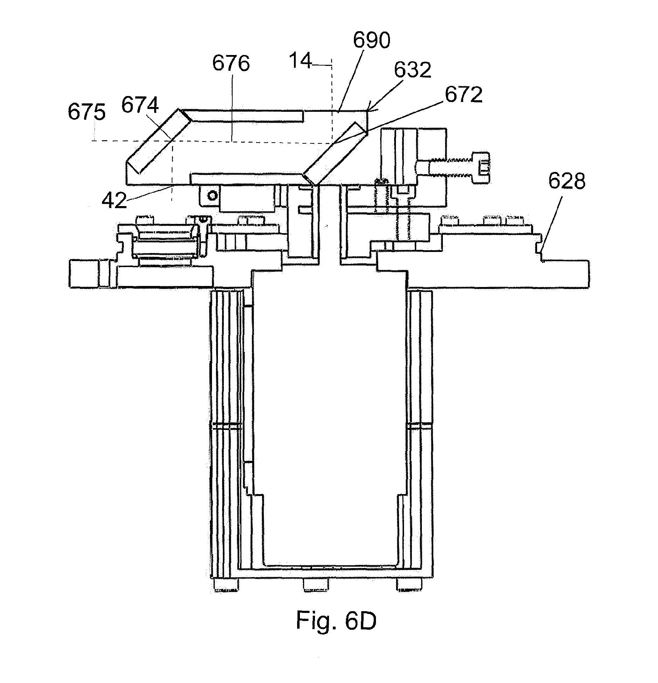

Figure 6B is a rear perspective view and Figure 6C is a front perspective view of the optical fiber switch 616 of Figure 6A including the switch housing 628 and the redirector 632, without the six separate output fibers 634, 636, 638, 640, 641, 643 (illustrated in Figure 6A). Further, Figure 6D is a cut-away view of the portion of the optical fiber switch 616 illustrated in Figures 6B and 6C.

In this embodiment, as best illustrated in Figure 6D, the redirector 632 includes an input reflective surface 672 that is positioned in the path of the input beam 14, and an output reflective surface 674 that is substantially parallel to (in parallel planes) and spaced apart from the input reflective surface 672 along a redirector longitudinal axis 675 that is perpendicular to the input beam 14. In this embodiment, each reflective surface 672, 674 reflects the beam. For example, the input reflective surface 672 can redirect the input beam 14 approximately ninety degrees, and the output reflective surface 674 can redirect an intermediate beam 676 reflected off of the input reflective surface 672 approximately ninety degrees. In this embodiment, the input reflective surface 672 is at an angle of approximately forty-five degrees relative to the input beam 14, and the output reflective surface 674 is at an angle of approximately forty-five degrees relative to both the intermediate beam 676 and the redirected beam 42. With this design, in this embodiment, the redirected beam 42 is parallel and spaced apart from the input beam 14. Moreover, the input reflective surface 672 is fixedly coupled to the second reflective surface 674 so that they move concurrently during movement of the redirector 632.

Additionally, in this embodiment, the redirector 632 includes a rigid redirector housing 690 that fixedly and precisely retains the two parallel, spaced apart reflective surfaces 672, 674.

While the particular laser source assembly 10 as shown and disclosed herein is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. An optical fiber switch for alternatively directing an input beam, the optical switch comprising:
an input fiber that launches the input beam along an input axis;
a redirector that is positioned in the path of the input beam, the redirector redirecting the input beam so that a redirected beam (i) launches from the redirector along a first redirected axis that is spaced apart from the input axis when the redirector is positioned at a first position, and (ii) launches from the redirector along a second redirected axis that is spaced apart from the input axis when the redirector is positioned at a second position that is different from the first position;
a redirector mover that moves the redirector about a movement axis between the first position and the second position;
a first output fiber having a first fiber inlet that is positioned along the first redirected axis; and
a second output fiber having a second fiber inlet that is positioned along the second redirected axis.

2. The optical fiber switch of claim 1 wherein the movement axis is substantially coaxial with the input axis.

3. The optical fiber switch of claim 1 or 2 wherein the first redirected axis is substantially parallel to the input axis, and wherein the second redirected axis is substantially parallel to the input axis.

4. The optical fiber switch of any of the claim 1 to 3 wherein the redirector includes an input reflective surface that is positioned in the path of the input beam and an output reflective surface that is substantially parallel to and spaced apart from the input reflective surface.

5. The optical fiber switch of claim 4 wherein the input reflective surface redirects the input beam approximately ninety degrees, and the second reflective surface redirects the input beam approximately ninety degrees.

6. The optical fiber switch of claim 4 or 5 wherein the input reflective surface is fixedly coupled to the second reflective surface.

7. The optical fiber switch of any of the claims 1 to 6 wherein the redirector redirects the input beam so that resulting redirected beam launches from the redirector along a third redirected axis that is spaced apart from the input axis when the redirector is positioned at a third position that is different from the first position and the second position; and wherein the redirector mover moves the redirector between the first position, the second position, and the third position.

8. The optical fiber switch of any of the claims 1 to 7 further comprising
- a first coupling lens that is positioned on the first redirected axis between the redirector and the first fiber inlet when the redirector is in the first position, the first coupling lens focusing the redirected beam at the first fiber inlet when the redirector is in the first position, and/or
- a second coupling lens that is positioned on the second redirected axis between the redirector and the second fiber inlet when the redirector is in the second position, the second coupling lens focusing the redirected beam at the second fiber inlet when the redirector is in the second position.

9. A light source assembly comprising a light source generating an input beam, and the optical fiber switch of any of the claims 1 to 8 that alternatively directs the input beam to the first output fiber or the second output fiber.

10. A missile jamming system for jamming an incoming missile, the missile jamming system comprising the laser source assembly of claim 9 directing the beam at the incoming missile.

11. A method for directing an input beam, the method comprising the steps of:
launching the input beam along an input axis;
positioning a redirector in the path of the input beam, the redirector redirecting the input beam so that a redirected beam (i) launches from the redirector along a first redirected axis that is spaced apart from the input axis when the redirector is positioned at a first position, and (ii) launches from the redirector along a second redirected axis that is spaced apart from the input axis when the redirector is positioned at a second position that is different from the first position;
moving the redirector about a movement axis between the first position and the second position with a redirector mover;
positioning a first output fiber having a first fiber inlet along the first redirected axis; and
positioning a second output fiber having a second fiber inlet along the second redirected axis.

12. The method of claim 11 wherein the step of moving the redirector includes the movement axis being substantially coaxial with the input axis; wherein the first redirected axis is substantially parallel to the input axis, and wherein the second redirected axis is substantially parallel to the input axis.

13. The method of claim 11 or 12 wherein the step of positioning the redirector includes the redirector comprising an input reflective surface that is positioned in the path of the input beam and an output reflective surface that is substantially parallel to and spaced apart from the input reflective surface; wherein the input reflective surface is fixedly coupled to the second reflective surface.

14. The method of claim 13 wherein the input reflective surface redirects the input beam approximately ninety degrees, and the second reflective surface redirects the input beam approximately ninety degrees.

15. The method of any of the claims 11 to 14 further comprising the step of positioning a first coupling lens on the first redirected axis between the redirector and the first fiber inlet when the redirector is in the first position, the first coupling lens focusing the redirected beam at the first fiber inlet when the redirector is in the first position.
